# FASCICULE DE BREVET EUROPEEN

(11) **EP 1 453 279 B1**
(45) Date de publication et mention de la délivrance du brevet: **06.06.2007**
(21) Numéro de dépôt: 04290472.2
(22) Date de dépôt: 20.02.2004
(51) Int. Cl.: H04L 29/12

(54) **Ordonnancement d'adresses dans serveur de noms de domaine**
Sortierung von Adressen in einem Domainnamenserver
Sorting addresses in a domain name server

(30) Priorité: 28.02.2003 FR 0302443
(43) Date de publication de la demande: 01.09.2004
(73) Titulaire: Alcatel Lucent, 75008 Paris (FR)
(72) Inventeur: Preguica, Christphe, 91300 Massy (FR); Rebierre, Nicolas, 91300 Massy (FR)
(74) Mandataire: Chaffraix, Sylvain

(56) Documents cités:
- WO-A-01/91370
- WO-A-02/39699
- "Re: (ngtrans) I-D ACTION:draft-ietf-ngtrans-6to4-03.txt" GOOGLE'S CACHE, [Online] 14 octobre 1999 (1999-10-14), pages 1-5, XP002262761 Extrait de l'Internet: URL:http://www.google.be/search?q=cache:-F uPf1YetN4J:www.wcug.wwu.edu/lists/ngtrans/ 199910/msg00056.html+DNS+%22list+of+addres ses%22++6to4+order+OR+ordered&hl=nl&ie=UTF -8> [extrait le 2003-11-25]
- RICHARD DRAVES: "draft-ietf-ipngwg-default-addr-select-05. txt: Default Address Selection for IPv6" INTERNET DRAFT, [Online] 4 juin 2001 (2001-06-04), pages 1-15, XP002262762 Extrait de l'Internet: URL:http://www.ietf.org/proceedings/01aug/ I-D/draft-ietf-ipngwg-default-addr-select- 05.txt> [extrait le 2003-11-25]
- GULBRANDSEN A ET AL: "A DNS RR for specifying the location of services (DNS SRV)" REQUEST FOR COMMENT: RFC2782, février 2000 (2000-02), XP002176085 Extrait de l'Internet: URL:http://www.faqs.org/rfcs/rfc2782.html> [extrait le 2001-08-29]

## Description

La présente invention est relative aux réseaux de télécommunication, utilisant la pile protocolaire IPv6 (*Internet Protocol - version 6*). Plus précisément, elle concerne la résolution d'adresses au sein d'un serveur de noms de domaine associé à de tels réseaux de télécommunication.

De tels serveurs de noms de domaine sont bien connus de l'état de la technique, et sont classiquement appelés selon leur acronyme en langue anglaise DNS, pour « *Domain Name Server* ». Le fonctionnement des DNS est standardisé et décrit dans les RFC 1034 et 1035 de l'IETF (*Internet Engineering Task Force*).

Le but des serveurs de noms de domaine est de simplifier l'adressage au sein d'un réseau de télécommunication IP : ils agissent comme des annuaires associant des noms symboliques des éléments de réseau (ou noms de domaine), ne représentant aucune réalité sur le réseau, aux adresses numériques de ces éléments de réseau.

Ainsi, lorsqu'un premier élément de réseau veut adresser un flux de données à un second élément de réseau, il peut utiliser soit l'adresse de ce second élément de réseau, s'il la connaît, soit le nom symbolique de ce second élément.

Dans ce dernier cas, le premier élément de réseau adresse une requête au serveur de noms de domaine, contenant ce nom symbolique. En retour, il reçoit la (ou les) adresse numérique correspondant à ce nom symbolique. Il peut alors envoyer le flux de données vers ce second élément de réseau en utilisant son adresse.

WO 02/39699A1 décrit un serveur de noms de domaine pour un réseau IPv4 comprenant des entrées pour des hôtes proxy capables de fournir un contenu prédétermine et un poids pour chaque hôte proxy définissant un ordre dans lequel lesdits hôtes proxies doivent être contactés. Ce poids est déterminé en fonction de la proximité géographique entre l'hôte proxy et le client du DNS.

Toutefois, un problème se pose lorsqu'un même nom de domaine est associé à plusieurs adresses. Cela est notamment le cas dans un réseau utilisant la pile protocolaire IPv6, les spécifications de IPv6 permettant en effet l'association de plusieurs adresses à un même élément de réseau.

L'utilisation d'un système DNS dans un réseau de type IPv6 est décrite dans le RFC 1886 de l'IETF, intitulé « *DNS Extensions to Support IP Version 6* ».

Ces adresses peuvent être des adresses de différents niveaux. Ainsi qu'il est décrit dans le RFC 2373 de l'IETF, intitulé « *IP version 6 Addressing Architecture* », différents types d'adresses existent, différentiés sur la base d'un préfixe. Il existe ainsi des adresses à valeur globale, et des adresses à valeur locale, notamment locales à un site. Lorsque l'émetteur et le destinataire du flux de données se situent dans un même espace d'adressage (un site), il convient d'utiliser une adresse locale propre à cet espace d'adressage. Ce type d'adresse locale à un site sera ultérieurement appelé aussi, adresse de site.

Dans le cas contraire, une adresse globale doit être utilisée, sinon le flux de données ne pourra être correctement acheminé vers le destinataire.

Si, l'adresse globale est systématiquement utilisée, les flux de données seront correctement acheminés, mais l'utilisation du réseau ne sera pas optimale. De plus, aucune garantie n'est donnée sur le fait que les flux ne sortiront pas du site.

On peut aussi avoir des adresses de différentes natures, comme une adresse IPv6 et par exemple une adresse dite « 6to4 », telle que définie par le RFC 3056 de l'IETF (*Internet Engineering Task Force)* intitulé « *Connection of IPv6 Domains via IPv4 Clouds* ».

Ce mécanisme est un des mécanismes permettant la migration graduelle d'un réseau conforme à IPv4 vers un réseau conforme à IPv6.

Le mécanisme « 6To4 » permet à des éléments de réseau purement IPv6 de communiquer avec d'autres éléments de réseau IPv6 au travers d'éléments de réseau purement IPv4. Pour ce faire, un type particulier d'adresses est défini, appelé « adresses 6TO4 ». Les adresses de ce type sont reconnaissables, par les éléments de réseau, en ce qu'elles commencent par le préfixe « 2002 » : aussi, à la réception d'un paquet portant une telle adresse, un élément de réseau en bordure du site IPv6 est à même de l'encapsuler dans un paquet IPv4 pour lui faire atteindre sa destination.

L'utilisation de la mauvaise adresse pourrait déboucher par la réception d'une adresse IPv6 par un élément de réseau compatible uniquement avec IPv4 ou bien sur une limitation inacceptable de l'espace d'adressage. Il en résulte alors le non-acheminement du flux de données.

Dans ces deux situations, un même nom est associé à plusieurs adresses. Le serveur de noms de domaine renvoie donc comme réponse à une requête, l'ensemble de ces adresses, et l'élément de réseau émetteur de cette requête utilise arbitrairement l'une ou l'autre de ces adresses.

Or, dans la première situation, l'utilisation d'une adresse non appropriée n'est pas optimale du point de vue du réseau.

De surcroît, dans la seconde situation, l'utilisation d'une adresse non appropriée peut ne pas permettre d'adresser correctement l'élément de réseau que l'on veut atteindre.

Il existe des solutions consistant à ordonnancer les adresses, ou bien à effectuer des choix des différentes adresses en fonction de certains critères, mais ces solutions consistent à effectuer les choix ou les tris au niveau des applications. De telles solutions sont par exemple décrites dans le document « draft-ietf-ipngwg-default-addr-select-05.txt » du 4 juin 2001, et dans les discussions générées par le document « draft-ietf-ngtrans-6to4-03.txt »

Mais une telle solution surcharge les applications, et en leur laissant trop de liberté peut engendrer des mauvais comportements d'ensemble du réseau de communication. De surcroît, une application peut ne pas avoir la visibilité du réseau suffisante pour permettre le choix de l'adresse optimale. Enfin, une telle solution ne permet pas de déploiement d'une politique d'ensemble de gestion du réseau.

Le but de l'invention est de palier ces inconvénients de l'état de la technique, en permettant à l'élément de réseau émetteur d'un flux de données, d'utiliser une adresse effective et optimale.

Pour ce faire, l'invention a pour objet un serveur de noms de domaine, associé à un réseau de données, comportant
- des moyens de réception de requêtes contenant un nom de domaine et
- des moyens pour retourner à l'émetteur de la requête, une réponse contenant une ou plusieurs adresses associées au nom de domaine,

Selon l'invention, ces adresses sont ordonnancées par le serveur de noms de domaine, au sein de la réponse, au moins en fonction du contenu de la requête, comme défini dans les revendications 1 et 2.

Selon un mode de réalisation de l'invention, l'ordonnancement est effectué au moins en fonction du contenu de la requête.

L'ordonnancement peut être effectué en outre en fonction de la topologie du réseau, l'adresse la plus locale permettant d'adresser à la fois ledit émetteur de la requête et l'élément de réseau correspondant au nom de domaine, étant insérée en premier.

L'ordonnancement peut aussi être effectué de sorte qu'en cas de présence d'un nuage IPv4 entre l'émetteur de la requête et l'élément de réseau correspondant au nom de domaine, une adresse de type « 6to4 » est insérée en premier.

L'invention et ses avantages apparaîtront de façon plus claire dans la description qui va suivre en liaison avec les figures annexées.
La figure 1 illustre une première mise en oeuvre de l'invention.
La figure 2 schématise une seconde mise en oeuvre de l'invention.

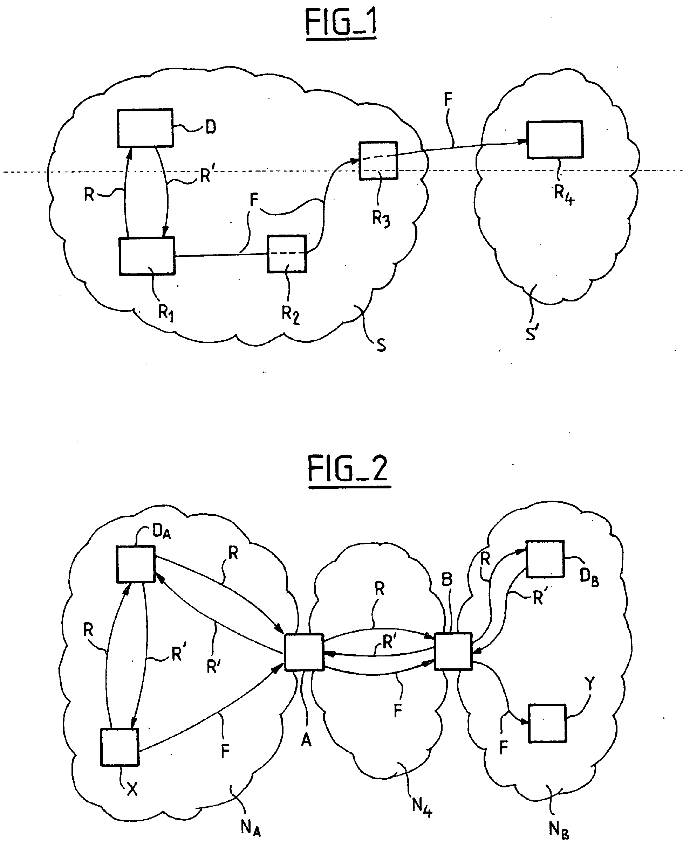

La figure 1 illustre un réseau composé de deux sites, S et S'. Le site S contient des éléments de réseau R₁, R₂ et R₃, et le site S' contient un élément de réseau R₄.

Comme il a été évoqué précédemment, il existe différents types d'adresses IPv6, que l'on peut distinguer par des préfixes différents.

Parmi ces types d'adresses, on trouve des adresses locales de site (*Site-local address*), ou adresses de site, et des adresses globales.

On reconnaît une adresse locale de site en ce qu'elle est de la forme « FEC0::/10 », ce qui signifie que les 10 premiers bits ont pour valeur FEC0 et que les 118 suivants représentent l'espace d'adressage proprement dit. Similairement, on reconnaît une adresse local de lien, en ce qu'elle est de la forme « FE80::/80 ».

Par conséquent, l'élément de réseau R₄, par exemple, peut posséder une adresse globale a_{g} et une adresse local de site aₛ. Cette adresse globale, a_{g} peut être telle que définie dans le RFC 2374, intitulé «An *IPv6 Aggregatable Global Unicast Address* ». Elle permet à l'élément de réseau R₄ d'entrer en communication avec des éléments de réseau, situés dans d'autres sites, comme par exemple, l'élément de réseau R₁ situé dans le site S.

On suppose que l'élément de réseau R₁ désire transmettre un flux de données à l'élément de réseau R₄.

Il adresse, pour ce faire, une requête R au serveur de noms de domaine D, contenant le nom symbolique ou nom de domaine, de l'élément de réseau R₄.

Selon l'invention, le serveur de noms de domaine D est apte à ordonnancer les différentes adresses de l'élément de réseau recherché, dans la réponse faite à l'émetteur de la requête R.

Il peut utiliser pour ce faire les informations contenues dans cette requête R. Parmi ces informations, on trouve notamment l'adresse source de la requête, c'est-à-dire l'adresse de l'élément de réseau R₁. Connaissant les adresses des éléments de réseau R₁ et R₄, ainsi que la topologie du réseau, le serveur de noms de domaine peut déterminer quel type d'adresse doit être utilisé. Dans l'exemple présent, il peut déterminer que les éléments de réseau R₁ et R₄ ne sont pas situé dans le même site et donc que l'adresse locale ne doit pas être utilisée.

Abstraction faite des autres adresses possibles, le serveur D ordonne donc les adresses dans l'ordre a_{g}, aₛ dans la réponse R' qu'il transmet à l'élément de réseau R₁.

À la réception de cette réponse R', l'élément de réseau R₁ peut déterminer quelle adresse utiliser, en choisissant la première dans l'ordre, c'est-à-dire l'adresse a_{g}. Il peut alors utiliser l'adresse a_{g} pour l'insérer comme adresse de destination dans les paquets du flux de données F qu'il transmet à l'élément de réseau R₄.

Sans cet ordonnancement effectué par le serveur de noms de domaine D, l'élément de réseau R₁ n'aurait aucun moyen de déterminer quelle adresse il devrait utiliser. Il aurait alors peut-être utilisé l'adresse locale a_{L}, ce qui ici aurait débouché sur un non-acheminement du flux de données F.

Autrement dit, l'ordonnancement réalisé par le serveur de noms de domaine D, est effectué en fonction de la requête : si l'adresse source de la requête est une adresse locale, et si le nom demandé possède une adresse locale, c'est cette adresse locale qui sera renvoyé en premier.

D'une façon plus générale, il consiste à insérer en première position, l'adresse la plus locale permettant d'adresser à la fois l'émetteur (ici l'élément de réseau R₁) de la requête R et l'élément de réseau correspondant au nom de domaine recherché (ici l'élément de réseau R₄).

Si l'élément de réseau R₁ désire transmettre un flux de données à l'élément de réseau Rₐ, le serveur de noms de domaine renverrait son adresse locale de site en premier (si elle existe), afin que l'élément de réseau R₁ utilise celle-ci dans ses communications avec R_{a.}

La figure 2 illustre une seconde mise en oeuvre de l'invention dans le cadre d'un réseau hétérogène composé d'éléments de réseau IPv4 et d'éléments de réseaux IPv6 ou IPv4/IPv6.

Différents mécanismes existent. Dans cet exemple, le mécanisme 6to4 est utilisé. L'invention est toutefois susceptible de s'appliquer à différents mécanismes du moment que différentes adresses sont nécessaires.

Dans cet exemple, un réseau de données est composé de deux domaines N_{A} et N_{B} séparés par un nuage N₄, composé uniquement d'éléments de réseau IPv4. Cet exemple illustre le cas classique, de deux sites ayant migrés vers la technologie IPv6 et qui sont connectés *via* un réseau tiers, fournis par un opérateur de télécommunication, n'ayant pas encore migré et encore compatible uniquement avec les protocoles lPv4.

Les éléments de réseau A et B sont des routeurs connectant le nuage N₄ respectivement aux domaines N_{A} et N_{B}.

Dans chacun des domaines N_{A} et N_{B}, on a un serveur de noms de domaine D_{A} et D_{B}, respectivement, ou DNS. On supposera que les deux serveurs D_{A} et D_{B} sont convenablement configurés et disposent mutuellement de leur bonne adresse.

Dans un premier temps, l'élément de réseau émetteur X, désirant transmettre un flux de données à un élément de réseaux destinataire Y, situé dans le domaine N_{B}, émet une requête R au serveur de noms de domaine D_{A} associé au domaine N_{A}. Cette requête R contient le nom symbolique du destinataire Y, et contient une adresse source, c'est-à-dire une adresse de l'émetteur X.

À la réception de cette requête R, le serveur D_{A} détermine s'il possède une association entre le nom symbolique contenu dans la requête et une adresse. Comme le destinataire Y est hors du domaine N_{A} « contrôlé » par le serveur D_{A}, cette association ne figure pas dans les tables ou dans la base de données du serveur D_{A}. Selon une configuration récursive, il transmet la requête vers le serveur de noms de domaine D_{B} du domaine N_{B}.

Le destinataire Y et le serveur D_{B} faisant partie du même domaine N_{B}, ce dernier possède les informations relatives au destinataire Y et à l'association de son nom de domaine (symbolique) et de ses adresses. Dans cet exemple, le destinataire Y possède au moins deux adresses :
- une adresse aᵥ₆ conforme au protocole IPv6 permettant à l'élément de réseau Y de communiquer avec les autres éléments de réseau du domaine Y ou avec des éléments de réseau d'autres domaines IPv6 (non représentés).
- Une adresse a₆ₜₒ₄ conforme à la technologie « 6to4 » précédemment évoquée, permettant la communication de deux éléments de réseau IPv6 au travers d'un nuage IPv4.

Selon l'invention, le serveur de noms de domaine D_{B} ordonnance les deux (ou plus) adresses correspondant au nom symbolique de l'élément de réseau Y recherché.

L'ordonnancement peut se faire en fonction du contenu de la requête transmise par le serveur de noms de domaine D_{A}. Cette requête contient en effet l'adresse de l'émetteur (le serveur de noms de domaine D_{A}), ce qui permet au serveur de noms de domaine D_{B} de déterminer que, comme l'adresse source est une adresse de type « 6to4 », la technologie « 6to4 » doit être utilisée.

Il peut donc déterminer que l'adresse pertinente est l'adresse a₆ₜₒ₄ du destinataire Y, et il peut par conséquent, ordonner les différentes adresses en mettant l'adresse la plus pertinente, a₆ₜₒ₄ (adresse « 6to4 » du destinataire Y) en premier et insérer ces adresses ordonnées dans une réponse R'.

Cette réponse est envoyée au serveur de noms de domaine D_{A} qui est maintenant en mesure de répondre à la requête de l'émetteur X.

Selon l'invention, cet émetteur est apte à interpréter l'ordre des adresses contenues dans la réponse R'. Cette interprétation peut consister à simplement utiliser la première adresse contenue dans la réponse. Cette première adresse est l'adresse a₆ₜₒ₄, compatible avec le mécanisme « 6to4 ».

L'élément de réseau émetteur X peut alors utiliser l'adresse a₆ₜₒ₄, pour adresser le flux de données vers l'élément de réseau destinataire Y. Ce flux de données F traversera les éléments de réseau A et B et le nuage N₄, en étant correctement acheminé.

Autrement dit, l'ordonnancement réalisé par le serveur de noms de domaine D_{B} est effectué de sorte qu'en cas de présence d'un nuage IPv4 (ici N₄)entre l'émetteur de la requête (ici X) et l'élément de réseau correspondant au nom de domaine contenu dans la requête (ici Y), une adresse de type « 6to4 » est insérée en premier (ici α₆ₜₒ₄).

C'est grâce à cet ordonnancement effectué par le serveur de noms de domaine D_{B} que l'élément de réseau émetteur X est à même de déterminer l'adresse a₆ₜₒ₄ à utiliser.

## Revendications

1. Dispositif pour un réseau de données utilisant la pile protocolaire lPv6, ledit dispositif comportant des moyens d'ordonnancement d'adresses pour ordonnancer, en fonction d'une adresse IPv6 d'un premier élément de réseau, plusieurs adresses associées à un second élément de réseau supportant l'adressage IPv6 et correspondant à un nom de domaine, lesdits moyens d'ordonnancement étant aptes à effectuer l'ordonnancement en fonction de la topologie du réseau, de sorte que lorsque l'adresse IPv6 du premier élément de réseau est une adresse locale appartenant à un espace d'adressage et que les adresses associées au second élément de réseau comportent au moins une adresse IPv6 globale et une adresse lPv6 locale appartenant au même espace d'adressage, l'adresse IPv6 associée au second élément de réseau la plus locale correspondant audit espace d'adressage est classée en premier, **caractérisé en ce que** ledit dispositif est configuré sous la forme d'un serveur de noms de domaine DNS, associé audit réseau de données, ledit serveur de noms de domaine comportant des moyens de réception de requêtes (R) aptes à recevoir une requête contenant ledit nom de domaine et ladite adresse IPv6 du premier élément de réseau et des moyens pour retourner à l'émetteur de ladite requête, une réponse contenant une ou plusieurs adresses associées audit second élément de réseau correspondant audit nom de domaine, et **en ce que** lorsque ladite réponse contient plusieurs adresses, lesdites adresses sont ordonnancées par lesdits moyens d'ordonnancement du serveur de noms de domaine, au sein de ladite réponse, au moins en fonction de ladite adresse IPv6 du premier élément de réseau contenue dans ladite requête.

2. Dispositif pour un réseau de données utilisant la pile protocolaire IPv6, ledit dispositif comportant des moyens d'ordonnancement d'adresses pour ordonnancer, en fonction d'une adresse IPv6 d'un premier élément de réseau, plusieurs adresses associées à un second élément de réseau supportant l'adressage IPv6 et correspondant à un nom de domaine, lesdits moyens d'ordonnancement étant aptes à effectuer l'ordonnancement de sorte que lorsque l'adresse IPv6 du premier élément de réseau est une adresse de type « 6to4 » commençant par le préfixe « 2002 » et que les adresses associées au second élément de réseau comportent ou moins une adresse de type « 6to4 » commençant par le préfixe « 2002 », une adresse de type « 6to4» commençant par le préfixe « 2002 »est classée en premier, **caractérisé en ce que** ledit dispositif est configuré sous la forme d'un serveur de noms de domaine DNS, associé audit réseau de données, ledit serveur de noms de domaine comportant des moyens de réception de requêtes (R) aptes à recevoir une requête contenant ledit nom de domaine et ladite adresse IPv6 du premier élément de réseau et des moyens pour retourner à l'émetteur de ladite requête, une réponse contenant une ou plusieurs adresses associées audit second élément de réseau correspondant audit nom de domaine, et **en ce que** lorsque ladite réponse contient plusieurs adresses, lesdites adresses sont ordonnancées par lesdits moyens d'ordonnancement du serveur de noms de domaine, ou sein de ladite réponse, au moins en fonction de ladite adresse IPv6 du premier élément de réseau contenue dans ladite requête.

## Claims

1. Device for a data network utilizing the IPv6 protocol stack, said device including address sequencing means, for sequencing, as a function of an IPv6 address of a first network element, a plurality of addresses associated with a second network element supporting IPv6 addressing and corresponding to a domain name, said sequencing means being adapted to effect the sequencing as a function of the topology of the network, so that when the lPv6 address of the first network element is a local address belonging to an addressing space and the addresses associated with the second network element include at least one global IPv6 address and one local IPv6 address belonging to the same addressing space, the more local IPv6 address associated with the second network element corresponding to said addressing space is classed first, **characterized in that** said device is configured in the form of a domain name server DNS, associated with said data network, said domain name server including means for receiving requests (R) adapted to receive a request containing said domain name and said lPv6 address of the first network element and means for returning to the sender of said request a response containing one or more addresses associated with said second network element corresponding to said domain name, and **in that** if said response contains a plurality of addresses, said addresses are sequenced by said sequencing means of the domain name server, within said response, at least as a function of said IPv6 address of the first network element contained in said request.

2. Device for a data network utilizing the lPv6 protocol stack, said device including address sequencing means for sequencing, as a function of an IPv6 address of a first network element, a plurality of addresses associated with a second network element supporting lPv6 addressing and corresponding to a domain name, said sequencing means being adapted to effect the sequencing so that if the lPv6 address of the first network element is a "6 to 4" type address beginning with the prefix "2002" and the addresses associated with the second network element include at least one "6 to 4" type address beginning with the prefix "2002", a "6 to 4" type address beginning with the prefix "2002" is classed first, **characterized in that** said device is configured in the form of a domain name server DNS, associated with said data network, said domain name server including means for receiving requests (R) adapted to receive a request containing said domain name and said IPv6 address of the first network element and means for returning to the sender of said request a response containing one or more addresses associated with said second network element corresponding to said domain name, and **in that** if said response contains a plurality of addresses, said addresses are sequenced by said sequencing means of the domain name server, within said response, at least as a function of said lPv6 address of the first network element contained in said request.

## Patentansprüche

1. Vorrichtung für ein Datennetz, das die Protokollschicht IPv6 verwendet, wobei die genannte Vorrichtung Mittel zur Adressensortierung umfasst, die mehrere, einem zweiten Netzelement zugeordnete Adressen in Abhängigkeit von der IPv6-Adresse eines ersten Netzelements sortieren, wobei das zweite Netzelement die IPv6-Adressierung unterstützt und einem Domainnamen entspricht, wobei die genannten Mittel zur Sortierung in der Lage sind, die Sortierung in Abhängigkeit von der Topologie des Netzes auszuführen, so dass, wenn es sich bei der IPv6-Adresse des ersten Netzelements um eine lokale Adresse handelt, die zu einem Adressraum gehört, und die dem zweiten Netzelement zugeordneten Adressen mindestens eine globale IPv6-Adresse und eine lokale, zum gleichen Adressraum gehörend, IPv6-Adresse umfassen, die dem zweiten Netzelement zugeordnete, nächstgelegene lokale IPv6-Adresse in dem genannten Adressraum an die erste Stelle gesetzt wird, **dadurch gekennzeichnet, dass** die genannte Vorrichtung in Form eines Domainnamenservers DNS konfiguriert ist, der dem genannten Datennetz zugeordnet ist, wobei der genannte Domainnamenserver Mittel zum Empfang von Anfragen (R) umfasst, die in der Lage sind, eine Anfrage zu empfangen, die den genannten Domainnamen und die genannte IPv6-Adresse des ersten Netzelements enthält, sowie Mittel zur Rücksendung an den Absender der genannten Anfrage eine Antwort, die eine oder mehrere dem genannten zweiten Netzelement zugeordnete Adressen entsprechend dem genannten Domainnamen enthält, sowie **dadurch**, dass wenn die genannte Antwort mehrere Adressen enthält, die genannten Adressen von den genannten Sortierungsmitteln des Domainnamenservers innerhalb der genannten Antwort sortiert sind, und zwar zumindest in Abhängigkeit von der genannten IPv6-Adresse des ersten Netzelements, die in der genannten Anfrage enthalten ist.

2. Vorrichtung für ein Datennetz, das die Protokollschicht IPv6 verwendet, wobei die genannte Vorrichtung Mittel zur Adressensortierung umfasst, die mehrere, einem zweiten Netzelement zugeordnete Adressen in Abhängigkeit von der IPv6-Adresse eines ersten Netzelements sortieren, wobei das zweite Netzelement die IPv6-Adressierung unterstützt und einem Domainnamen entspricht, wobei die genannten Mittel zur Sortierung in der Lage sind, die Sortierung dergestalt auszuführen, so dass, wenn es sich bei der IPv6-Adresse des ersten Netzelements um eine Adresse vom Typ « 6to4 »handelt, die mit dem Präfix « 2002 » beginnt, und die dem zweiten Netzelement zugeordneten Adressen mindestens eine Adresse vom Typ « 6to4 » umfassen, die mit dem Präfix « 2002 » beginnt, eine Adresse vom Typ « 6to4 », die mit dem Präfix « 2002 » beginnt, an die erste Stelle gesetzt wird, **dadurch gekennzeichnet, dass** die genannte Vorrichtung in Form eines Domainnamenservers DNS konfiguriert ist, der dem genannten Datennetz zugeordnet ist, wobei der genannte Domainnamenserver Mittel zum Empfang von Anfragen (R) umfasst, die in der Lage sind, eine Anfrage zu empfangen, die den genannten Domainnamen und die genannte IPv6-Adresse des ersten Netzelements enthält, sowie Mittel zur Rücksendung eine Antwort an den Absender der genannten Anfrage, wobei die genannte Antwort eine oder mehrere dem genannten zweiten Netzelement zugeordnete Adressen entsprechend dem genannten Domainnamen enthält, sowie **dadurch**, dass wenn die genannte Antwort mehrere Adressen enthält, die genannten Adressen von den genannten Sortierungsmitteln des Domainnamenservers innerhalb der genannten Antwort sortiert sind, und zwar zumindest in Abhängigkeit von der genannten IPv6-Adresse des ersten Netzelements, die in der genannten Anfrage enthalten ist.
